# EUROPEAN PATENT APPLICATION

(11) **EP 4 733 831 A1**
(43) Date of publication of application: **29.04.2026**
(21) Application number: 25210905.3
(22) Date of filing: 23.10.2025
(51) Int. Cl.: G02C 5/14, G02C 11/06, G02C 11/00

(54) **TEMPLE ARM AND SMART GLASSES**

(30) Priority: 24.10.2024 CN 202411495511
(71) Applicant: Ningde Amperex Technology Ltd., Ningde City, Fujian Province 352100 (CN)
(72) Inventor: MA, Wu, Ningde City, Fujian Province, China, 352100 (CN); LIN, Sen, Ningde City, Fujian Province, China, 352100 (CN); QU, Qiong, Ningde City, Fujian Province, China, 352100 (CN); ZHANG, Guowen, Ningde City, Fujian Province, China, 352100 (CN)
(74) Representative: Icosa

(57) **Abstract**

A temple arm (10) includes a housing (11), a first electrode assembly (12), an electrolyte solution, and an acoustic assembly (13), and the housing (11) includes a first chamber (Q1) and a second chamber (Q2). The first electrode assembly (12) includes a first electrode terminal (121), the first electrode assembly (12) is disposed in the first chamber (Q1), and the first electrode terminal (121) extends out of the first chamber (Q1) and is located within the housing (11). The electrolyte solution is directly accommodated in the first chamber (Q1). The acoustic assembly (13) is disposed in the second chamber (Q2) and electrically connected to the first electrode terminal (121). The first electrode terminal (121) extends out of the first chamber (Q1) and is located within the housing (11), and the electrolyte solution is directly accommodated in the first chamber (Q1).

## Description

### TECHNICAL FIELD

This application relates to the technical field of wearable devices, and in particular, to a temple arm and smart glasses.

### BACKGROUND

Smart glasses belong to a type of wearable device, which are provided with various functional electronic components on the basis of traditional glasses and provide electrical energy to the electronic components through a battery, thereby offering users a rich and diverse functional experience. In the prior art, the space of a temple arm cannot be fully utilized, resulting in limited capacity of the battery that can be installed.

### SUMMARY

In view of this, this application provides a temple arm and smart glasses, which is conducive to increasing the capacity of an electrode assembly.

In a first aspect of this application, a temple arm is provided and includes a housing, a first electrode assembly and an acoustic assembly, and the housing includes a first chamber and a second chamber. The first electrode assembly includes a first electrode terminal, the first electrode assembly is disposed in the first chamber, and the first electrode terminal extends out of the first chamber and is located within the housing. An electrolyte solution is directly accommodated in the first chamber. The acoustic assembly is disposed in the second chamber and electrically connected to the first electrode terminal.

The first electrode terminal extends out of the first chamber and is located within the housing, and the electrolyte solution is directly accommodated in the first chamber. That is, a shell of the first electrode assembly directly serves as the housing of the temple arm. It is conducive to the electrical connection between the first electrode terminal and the acoustic assembly within the housing, and conducive to reducing the space occupied by the shell of the first electrode assembly that needs to be additionally provided inside the housing, and thus conducive to increasing the volume available for the first electrode assembly within the housing and increasing the capacity of the electrode assembly.

In one or more of the above embodiments, the housing includes a third chamber and a fourth chamber, the third chamber is provided with a control assembly, and the fourth chamber is provided with wiring. The first electrode terminal and the acoustic assembly are electrically connected to the control assembly, and the fourth chamber is in communication with the second chamber and the third chamber.

In the above embodiments, through the control assembly, it is conducive to adjusting parameters such as input power and volume size of the acoustic assembly, and improving the convenience of controlling the acoustic assembly.

In one or more of the above embodiments, along a first direction, the third chamber, the first chamber and the second chamber are sequentially connected.

In the above embodiments, it is conducive to simplifying the structure of the temple arm and reducing the volume of the temple arm.

In one or more of the above embodiments, the temple arm includes a second electrode assembly, and the second electrode assembly includes a second electrode terminal. The housing includes a fifth chamber, and along the first direction, the third chamber, the first chamber, the second chamber, and the fifth chamber are sequentially connected. The second electrode assembly is disposed in the fifth chamber, and the second electrode terminal extends out of the fifth chamber and is located within the housing. An other electrolyte solution is directly accommodated in the fifth chamber.

In the above embodiments, the second electrode terminal extends out of the fifth chamber and is located within the housing, and the electrolyte solution is directly accommodated in the fifth chamber. That is, the housing of the temple arm directly serves as a shell of the second electrode assembly. It is conducive to direct electrical connection between the second electrode terminal and the acoustic assembly within the housing, and conducive to reducing the space occupied by the shell of the second electrode assembly that needs to be additionally provided inside the housing, and thus conducive to increasing the volume available for the second electrode assembly within the housing and further increasing the capacity of the electrode assembly.

In one or more of the above embodiments, the first electrode terminal and the second electrode terminal extend toward the third chamber.

In the above embodiments, it is conducive to improving the convenience of electrical connection between the first electrode terminal, the second electrode terminal and the control assembly.

In one or more of the above embodiments, the first chamber is connected to the third chamber along the first direction. Along a second direction, a projection of the first chamber covers a projection of the second chamber. The housing includes an ear-hook portion, and the ear-hook portion is connected to the second chamber along the first direction. The first direction is perpendicular to the second direction.

In the above embodiments, it is conducive to reducing the restriction of the second chamber on the first chamber along the first direction, conducive to extending the first chamber along the first direction, and thus conducive to enabling the first electrode assembly to fully utilize the space of the temple arm and further increasing the capacity of the electrode assembly.

In one or more of the above embodiments, the housing includes a first housing and a second housing, and the first housing and the second housing are detachably connected to each other. The first housing includes the first chamber, and the second housing includes the second chamber, the third chamber, and the fourth chamber.

In the above embodiments, it is conducive to adopting different manufacturing processes to manufacture the first housing and the second housing separately, and improving the flexibility of manufacturing the housing.

In one or more of the above embodiments, the housing includes a first housing, a second housing, and a third housing, the first housing and the second housing are detachably connected to each other, and the first housing and the third housing are detachably connected to each other. The first housing includes the first chamber, the second housing includes the second chamber, the third chamber, and the fourth chamber, and the third housing includes the fifth chamber.

In the above embodiments, it is conducive to adopting different manufacturing processes to manufacture the first housing, the second housing and the third housing separately, and improving the flexibility of manufacturing the housing.

In one or more of the above embodiments, the housing is made of at least one of aluminum alloy, stainless steel, nickel, or magnesium alloy, or the housing is made of at least one of liquid crystal polymer or polychlorotrifluoroethylene.

In the above embodiments, it is conducive to improving the moisture barrier capability of the housing and prolonging the service life of the electrode assembly. Moreover, when the housing is made of at least one of aluminum alloy, stainless steel, nickel, or magnesium alloy, a thinner housing can achieve higher strength, which is conducive to further increasing the capacity of the electrode assembly. When the housing is made of at least one of liquid crystal polymer or polychlorotrifluoroethylene, the housing may be produced through injection molding, which is conducive to improving the convenience of manufacturing the housing.

In one or more of the above embodiments, the housing is made of at least one of polypropylene, polyethylene, or polyimide, a barrier layer is provided on an inner wall of the first chamber, and the barrier layer includes at least one of aluminum oxide or silicon oxide.

In the above embodiments, when the housing is made of at least one of polypropylene, polyethylene, or polyimide, the barrier layer is provided on the inner wall of the first chamber, which is conducive to improving the moisture barrier capability of the first chamber and prolonging the service life of the electrode assembly. Moreover, the housing may be produced through injection molding, which is conducive to improving the convenience of manufacturing the housing.

In one or more of the above embodiments, the first housing is made of at least one of aluminum alloy, stainless steel, nickel, or magnesium alloy, or the first housing is made of at least one of liquid crystal polymer or polychlorotrifluoroethylene.

In the above embodiments, it is conducive to improving the moisture barrier capability of the first housing and prolonging the service life of the first electrode assembly. Moreover, when the first housing is made of at least one of aluminum alloy, stainless steel, nickel, or magnesium alloy, a thinner housing can achieve higher strength, which is conducive to further increasing the capacity of the electrode assembly. When the first housing is made of at least one of liquid crystal polymer or polychlorotrifluoroethylene, the first housing may be produced through injection molding, which is conducive to improving the convenience of manufacturing the first housing.

In one or more of the above embodiments, the first housing is made of at least one of polypropylene, polyethylene or polyimide, a barrier layer is provided on an inner wall of the first chamber, and the barrier layer includes at least one of aluminum oxide or silicon oxide.

In the above embodiments, when the first housing is made of at least one of polypropylene, polyethylene, or polyimide, the barrier layer is provided on the inner wall of the first chamber, which is conducive to improving the moisture barrier capability of the first chamber and prolonging the service life of the electrode assembly. Moreover, the first housing may be produced through injection molding, which is conducive to improving the convenience of manufacturing the first housing.

In one or more of the above embodiments, the first housing and the third housing are made of at least one of aluminum alloy, stainless steel, nickel or magnesium alloy, or the first housing and the third housing are made of at least one of liquid crystal polymer or polychlorotrifluoroethylene.

In the above embodiments, it is conducive to improving the moisture barrier capability of the first housing and the third housing and prolonging the service life of the electrode assembly. Moreover, when the first housing and the third housing are made of at least one of aluminum alloy, stainless steel, nickel or magnesium alloy, a thinner housing can achieve higher strength, which is conducive to further increasing the capacity of the electrode assembly. When the first housing and the third housing are made of at least one of liquid crystal polymer or polychlorotrifluoroethylene, the first housing and the third housing may be produced through injection molding, which is conducive to improving the convenience of manufacturing the first housing and the third housing.

In one or more of the above embodiments, the first housing and the third housing are made of at least one of polypropylene, polyethylene, or polyimide, barrier layers are provided on inner walls of the first chamber and the fifth chamber, and the barrier layers include at least one of aluminum oxide or silicon oxide.

In the above embodiments, when the first housing and the third housing are made of at least one of polypropylene, polyethylene, or polyimide, the barrier layers are provided on the inner walls of the first chamber and the fifth chamber, which is conducive to improving the moisture barrier capability of the first chamber and the fifth chamber and prolonging the service life of the electrode assembly. Moreover, the first housing and the third housing may be produced through injection molding, which is conducive to improving the convenience of manufacturing the first housing and the third housing.

In a second aspect of this application, smart glasses are provided and include a frame, lenses and temple arms, wherein at least one of the temple arms is the temple arm according to the first aspect of this application. The lenses are disposed on the frame, and the temple arms are connected to the frame. The temple arms are conducive to increasing the capacity of the electrode assembly, thereby being conducive to prolonging the battery life of the smart glasses.

### BRIEF DESCRIPTION OF DRAWINGS

FIG. 1 is an exploded view of a temple arm according to a first embodiment of this application.
FIG. 2 is a front view of the temple arm according to the first embodiment of this application.
FIG. 3 is an enlarged view of a region A in FIG. 1.
FIG. 4 is a cross-sectional view taken along a line B-B in FIG. 2.
FIG. 5 is an exploded view of a temple arm according to a second embodiment of this application.
FIG. 6 is an exploded view of a temple arm according to a third embodiment of this application.
FIG. 7 is an enlarged view of a region C in FIG. 6.
FIG. 8 is a front view of a temple arm according to a fourth embodiment of this application.
FIG. 9 is an exploded view of the temple arm according to the fourth embodiment of this application.

### List of reference numerals:

10. Temple arm; 101. Head portion; 102. Middle portion; 103. Leg portion; 104. Ear-hook portion; 11. Housing; 111. Body portion; 1111. First wall; 1112. Second wall; 1113. Third wall; 1114. Fifth wall; 1115. Sound hole; 1116. Connecting hole; 111a. First main body; 111b. Second main body; 112. Cover portion; 1121. Fourth wall; 112a. First cover body; 112b. Second cover body; 112c. Third cover body; 112d. Fourth cover body; 112e. Fifth cover body; 12. First electrode assembly; 121. First electrode terminal; 1211. First tab; 1212. Second tab; 1213. First adapter; 1214. Second adapter; 122. First electrode plate; 123. Second electrode plate; 124. Separator; 13. Acoustic assembly; 14. Wiring; 15. Second electrode assembly; 151. second electrode terminal; 1511. Third tab; 1512. Fourth tab; 1513. Third adapter; 1514. Fourth adapter; Q1. First chamber; Q2. Second chamber; Q3. Third chamber; Q4. Fourth chamber; Q5. Fifth chamber; X. First direction; Y. Second direction; and Z. Third direction.

### DETAILED DESCRIPTION

Technical solutions in embodiments of this application will be described below in conjunction with accompanying drawings in the embodiments of this application. Apparently, the described embodiments are merely some rather than all of the embodiments of this application.

It is hereby noted that when a component is considered to be "connected" to another component, it can be directly connected to another component or may exist at the same time. When a component is considered to be "disposed on" another component, it can be set directly on another component or may exist at the same time.

Unless otherwise expressly specified, the term "a plurality of" as used herein means two or more.

The terms "first", "second", and the like are merely used to distinguish between different objects, and shall not be construed as any indication or implication of relative importance or any implicit indication of the quantity, particular sequence or primary-secondary relationship of the technical features indicated.

Unless otherwise defined, all technical and scientific terms used herein bear the same meanings as what is normally understood by a person skilled in the technical field of this application. The terms used herein in the specification of this application are merely for the purpose of describing specific embodiments and are not intended to limit this application. The term "and/or" used herein includes any and all combinations of one or more of the related listed items.

It should be understood that considering actual machining tolerances, in the technical solution of this application, when two components are disposed parallel to/perpendicular to each other along a same direction, a certain angle may exist between the two components, a tolerance of 0-±10% is allowed between the two components, and the two components are greater than, equal to, or less than the allowed tolerance of 0 to ±10%.

In a first aspect of embodiments of this application, a temple arm is provided and includes a housing, a first electrode assembly and an acoustic assembly, and the housing includes a first chamber and a second chamber. The first electrode assembly includes a first electrode terminal, the first electrode assembly is disposed in the first chamber, and the first electrode terminal extends out of the first chamber and is located within the housing. An electrolyte solution is directly accommodated in the first chamber. The acoustic assembly is disposed in the second chamber and electrically connected to the first electrode terminal.

The first electrode terminal extends out of the first chamber and is located within the housing, and the electrolyte solution is directly accommodated in the first chamber. That is, a shell of the first electrode assembly directly serves as the housing of the temple arm. It is conducive to the electrical connection between the first electrode terminal and the acoustic assembly within the housing, conducive to reducing the space occupied by the shell of the first electrode assembly that needs to be additionally provided inside the housing, and thus conducive to increasing the volume available for the first electrode assembly within the housing and increasing the capacity of the electrode assembly.

Some embodiments of this application will be described below in conjunction with the accompanying drawings. The following embodiments and features in the embodiments may be combined with each other without conflicts.

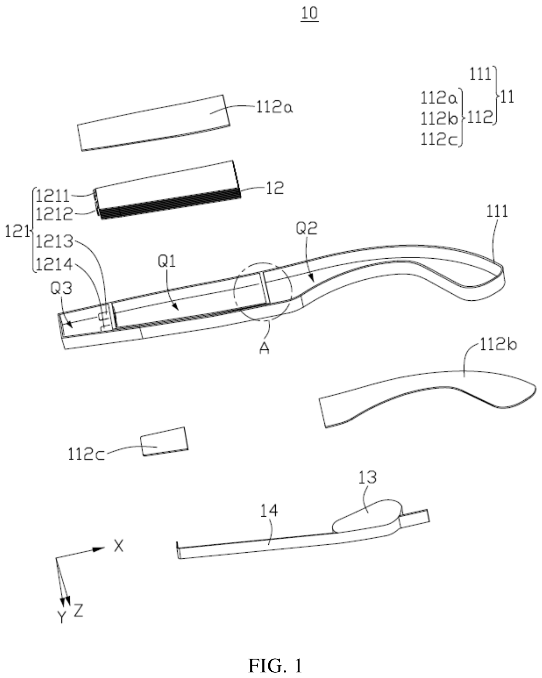

Referring to FIG. 1, an embodiment of this application provides a temple arm 10, which includes a housing 11, a first electrode assembly 12, an electrolyte solution and an acoustic assembly 13.

The housing 11 includes a first chamber Q1 and a second chamber Q2, and the first chamber Q1 and the second chamber Q2 are not in communication with each other.

In some embodiments, referring to FIG. 1, the second chamber Q2 is connected to the first chamber Q1 along a first direction X.

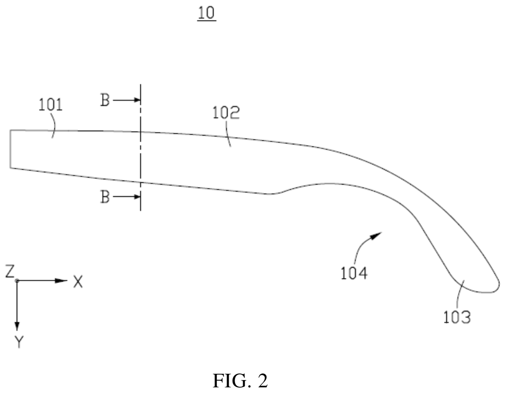

In some embodiments, referring to FIG. 2, along the first direction X, the temple arm 10 is sequentially divided into a head portion 101, a middle portion 102 and a leg portion 103. The head portion 101 is configured to be connected to a frame, and the leg portion 103 is arc-shaped.

In some embodiments, referring to FIG. 1, the first chamber Q1 is located in the middle portion 102, and the second chamber Q2 extends from the middle portion 102 to the leg portion 103.

In some embodiments, referring to FIG. 2, the housing 11 includes an ear-hook portion 104, and the ear-hook portion 104 is recessed along a direction opposite to a second direction Y. The ear-hook portion 104 is located in the second chamber Q2 and forms an ear-hook region. In some embodiments, the middle portion 102 and the leg portion 103 together form the ear-hook region.

The first electrode assembly 12 includes the first electrode terminal 121, the first electrode assembly 12 is disposed in the first chamber Q1, and the first electrode terminal 121 extends out of the first chamber Q1 and is located within the housing 11. The electrolyte solution is directly accommodated in the first chamber Q1.

The first electrode terminal 121 includes a first tab 1211 and a second tab 1212, and the first tab 1211 and the second tab 1212 have opposite polarities. In some embodiments, the first electrode terminal 121 only includes the first tab 1211 or the second tab 1212, that is, the first electrode terminal 121 only includes a single tab. Alternatively, the first electrode terminal 121 includes a plurality of tabs, which is not limited in this application.

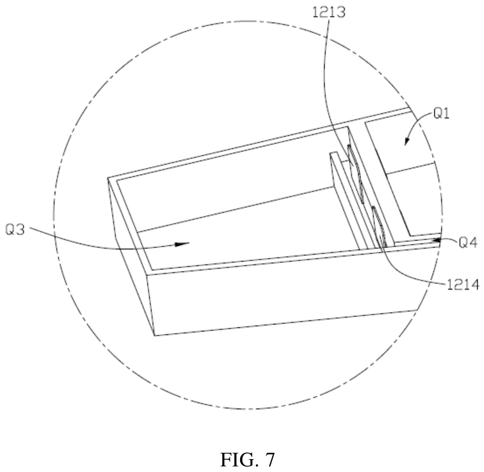

In some embodiments, the first tab 1211 and the second tab 1212 directly extend out of the first chamber Q1. In some embodiments, referring to FIG. 7, the first electrode terminal 121 includes a first adapter 1213 and a second adapter 1214. The first tab 1211 and the second tab 1212 are located in the first chamber Q1, the first adapter 1213 and the second adapter 1214 are located outside the first chamber Q1, the first adapter 1213 is electrically connected to the first tab 1211, and the second adapter 1214 is electrically connected to the second tab 1212.

In some embodiments, the first electrode terminal 121 includes poles (not shown). The first adapter 1213 is electrically connected to the first tab 1211 through the pole, and the second adapter 1214 is electrically connected to the second tab 1212 through the electrode post.

In some embodiments, the first adapter 1213 and the second adapter 1214 are made of one or more conductive materials such as copper, aluminum, nickel, or nickel alloy.

The acoustic assembly 13 is disposed in the second chamber Q2 and electrically connected to the first electrode terminal 121. The acoustic assembly 13 is configured to output audio. In some embodiments, the acoustic assembly 13 may also be referred to as an audio output assembly or a speaker assembly.

The first direction X is parallel to a length direction of the temple arm 10, the second direction Y is parallel to a height direction of the temple arm 10, and a third direction Z is parallel to a width direction of the temple arm 10. The first direction X, the second direction Y, and the third direction Z are mutually perpendicular to each other.

The above first electrode terminal 121 extends out of the first chamber Q1 and is located within the housing 11, and the electrolyte solution is directly accommodated in the first chamber Q1. That is, the housing 11 of the temple arm 10 directly serves as a shell of the first electrode assembly 12. It is conducive to the electrical connection between the first electrode terminal 121 and the acoustic assembly 13 within the housing 11, conducive to reducing the space occupied by the shell of the first electrode assembly 12 that needs to be additionally provided inside the housing 11, and thus conducive to increasing the volume available for the first electrode assembly 12 within the housing 11 and increasing the capacity of the electrode assembly.

The above second chamber Q2 extends from the middle portion 102 to the leg portion 103, and the ear-hook portion 104 is located in the second chamber Q2 and forms the ear-hook region, which is conducive to enabling the acoustic assembly 13 in the second chamber Q2 to be closer to the ear during wearing, thereby improving the auditory experience of the wearer.

The first chamber Q1 is filled with the electrolyte solution, and the first chamber Q1 and the second chamber Q2 are not in communication with each other, which is conducive to reducing the impact of the electrolyte solution on the circuit connection and audio quality of the acoustic assembly 13, etc.

In some embodiments, the housing 11 is connected to the frame, either through a fixed connection or a hinge connection. When the housing 11 is hinged to the frame, it is conducive to the rotation of the temple arm 10 relative to the frame, thereby facilitating the storage of the temple arm 10.

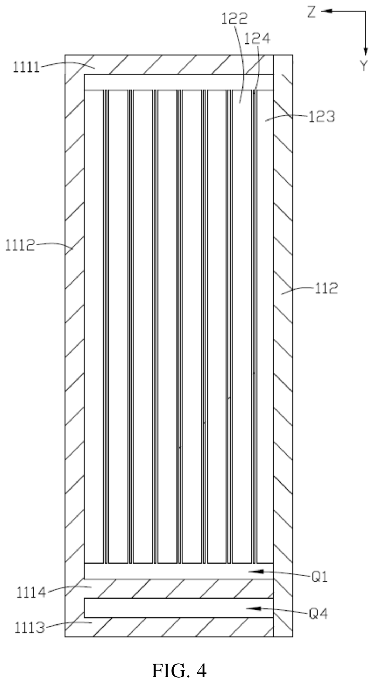

In some embodiments, referring to FIG. 4, the first electrode assembly 12 is a stacked electrode assembly. The stacked electrode assembly includes a first electrode plate 122, a second electrode plate 123 and a separator 124. The first electrode plate 122 and the second electrode plate 123 have opposite polarities, the separator 124 is disposed between the first electrode plate 122 and the second electrode plate 123, and the first electrode plate 122 and the second electrode plate 123 are sequentially stacked. The first tab 1211 is connected to the first electrode plate 122, and the second tab 1212 is connected to the second electrode plate 123. The stacked electrode assembly is conducive to adapting to an irregular space of the temple arm 10, which is conducive to more fully utilizing the space of the temple arm 10, thereby improving the energy density of the electrode assembly.

In some embodiments, the first electrode plate 122 is a positive electrode plate, and the second electrode plate 123 is a negative electrode plate. Alternatively, the first electrode plate 122 is a negative electrode plate, and the second electrode plate 123 is a positive electrode plate.

In other embodiments, the first electrode assembly 12 is a jelly-roll electrode assembly, and a first electrode plate 122, a second electrode plate 123 and a separator 124 of the jelly-roll electrode assembly are wound together. The jelly-roll electrode assembly has higher production efficiency, which is conducive to improving the production efficiency of the temple arm 10.

In some embodiments, referring to FIG. 1, the housing 11 includes a third chamber Q3, the third chamber Q3 is in communication with the second chamber Q2, and the third chamber Q3 and the first chamber Q1 are not in communication with each other. The third chamber Q3 is provided with a control assembly (not shown), and the first electrode terminal 121 and the acoustic assembly 13 are electrically connected to the control assembly. Through the control assembly, it is conducive to adjusting parameters such as input power and volume of the acoustic assembly 13, thereby improving the convenience of controlling the acoustic assembly 13. The third chamber Q3 is not in communication with the first chamber Q1, which is conducive to reducing the impact of the electrolyte solution on circuit connections and electronic components of the control assembly.

In some embodiments, the control assembly includes a circuit board, and the circuit board is provided with electrical components such as a memory and a processor. The memory stores preset control instructions, and the processor is configured to read and execute the control instructions.

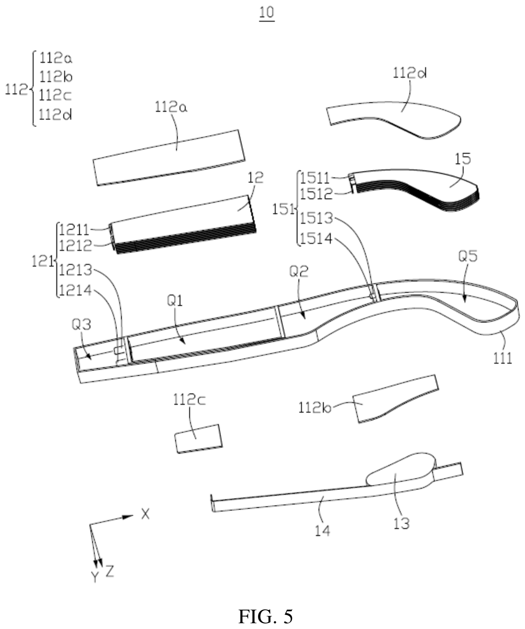

In some embodiments, referring to FIG. 1 and FIG. 5, along the first direction X, the third chamber Q3, the first chamber Q1, and the second chamber Q2 are sequentially connected, which is conducive to simplifying the structure of the temple arm 10 and reducing the volume of the temple arm 10.

In some embodiments, the first electrode terminal 121 extends toward the third chamber Q3, which is conducive to improving the convenience of electrical connection between the first electrode terminal 121 and the control assembly.

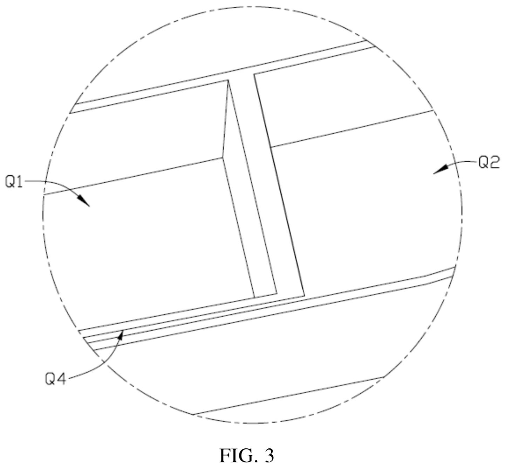

In some embodiments, referring to FIG. 1 and FIG. 3, the housing 11 includes a fourth chamber Q4, the fourth chamber Q4 is in communication with the second chamber Q2 and the third chamber Q3, and the fourth chamber Q4 is provided with wiring 14, which is conducive to the electrical connection between the acoustic assembly 13 and the control assembly through the wiring 14. The first chamber Q1 and the fourth chamber Q4 are not in communication with each other. This is conducive to reducing the impact of the electrolyte solution on the circuit connection of the wiring 14.

In some embodiments, the wiring 14 is a flexible printed circuit. The flexible printed circuit occupies a smaller space, which is conducive to reducing the space required for the fourth chamber Q4, and thus conducive to increasing the space of the first chamber Q1 and further increasing the capacity of the electrode assembly.

In some embodiments, referring to FIG. 5, the temple arm 10 includes a second electrode assembly 15, and the second electrode assembly 15 includes a second electrode terminal 151. The housing 11 includes a fifth chamber Q5, and the second electrode assembly 15 is disposed in the fifth chamber Q5. The additionally provided second electrode assembly 15 is conducive to increasing the capacity of the electrode assembly.

In some embodiments, the second electrode terminal 151 extends out of the fifth chamber Q5 and is located within the housing 11. An other electrolyte solution is directly accommodated in the fifth chamber Q5. The second electrode terminal 151 extends out of the fifth chamber Q5 and is located within the housing 11, and the electrolyte solution is directly accommodated in the fifth chamber Q5. That is, the housing 11 of the temple arm 10 directly serves as a shell of the second electrode assembly 15. It is conducive to electrical connection between the second electrode terminal 151 and the acoustic assembly 13 within the housing 11, conducive to reducing the space occupied by the shell of the second electrode assembly 15 that needs to be additionally provided inside the housing 11, and thus conducive to increasing the volume available for the second electrode assembly 15 within the housing 11 and further increasing the capacity of the electrode assembly.

In some embodiments, referring to FIG. 5, along the first direction X, the third chamber Q3, the first chamber Q1, the second chamber Q2, and the fifth chamber Q5 are sequentially connected, which is conducive to simplifying the structure of the temple arm 10 and reducing the volume of the temple arm 10.

The second electrode terminal 151 includes a third tab 1511 and a fourth tab 1512, and the third tab 1511 and the fourth tab 1512 have opposite polarities. In some embodiments, the second electrode terminal 151 only includes the third tab 1511 or the fourth tab 1512, that is, the second electrode terminal 151 only includes a single tab. Alternatively, the second electrode terminal 151 includes a plurality of tabs, which is not limited in this application.

In some embodiments, the third tab 1511 and the fourth tab 1512 directly extend out of the fifth chamber Q5. In some embodiments, the second electrode terminal 151 includes a third adapter 1513 and a fourth adapter 1514. The third tab 1511 and the fourth tab 1512 are located in the fifth chamber Q5, the third adapter 1513 and the fourth adapter 1514 are located outside the fifth chamber Q5, the third adapter 1513 is electrically connected to the third tab 1511, and the fourth adapter 1514 is electrically connected to the fourth tab 1512.

In some embodiments, the second electrode terminal 151 includes poles. The third adapter 1513 is electrically connected to the third tab 1511 through the pole, and the fourth adapter 1514 is electrically connected to the fourth tab 1512 through the electrode post.

In some embodiments, the third adapter 1513 and the fourth adapter 1514 are made of one or more conductive materials such as copper, aluminum, nickel, or nickel alloy.

In some embodiments, the second electrode terminal 151 extends toward the third chamber Q3, which is conducive to improving the convenience of electrical connection between the second electrode terminal 151 and the control assembly.

In some embodiments, the second electrode assembly 15 is a stacked electrode assembly. The stacked electrode assembly is conducive to adapting to an irregular space of the temple arm 10, which is conducive to more fully utilizing the space of the temple arm 10, thereby improving the energy density of the electrode assembly.

In some embodiments, the second electrode assembly 15 is a jelly-roll electrode assembly. The jelly-roll electrode assembly has higher production efficiency, which is conducive to improving the production efficiency of the temple arm 10.

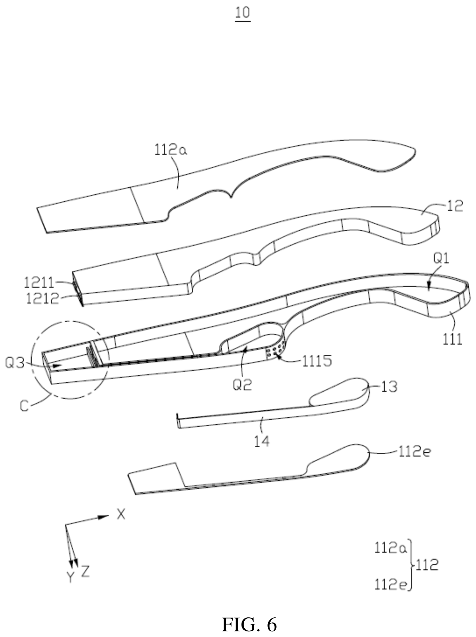

In some embodiments, referring to FIG. 6, the first chamber Q1 is connected to the third chamber Q3 along the first direction X. Along the second direction Y, a projection of the first chamber Q1 covers a projection of the second chamber Q2. It is conducive to reducing the restriction of the second chamber Q2 on the first chamber Q1 along the first direction X, conducive to extending the first chamber Q1 along the first direction X, and thus conducive to enabling the first electrode assembly 12 to fully utilize the space of the temple arm 10 and further increasing the capacity of the electrode assembly.

In some embodiments, the ear-hook portion 104 is connected to the second chamber Q2 along the second direction Y, and forms the ear-hook region. It is conducive to enabling the acoustic assembly 13 in the second chamber Q2 to be closer to the ear during wearing, thereby improving the auditory experience of the wearer.

In some embodiments, referring to FIG. 6, the third chamber Q3 is located at the head portion 101, and the first chamber Q1 is connected to the third chamber Q3 along the first direction X and extends toward the leg portion 103. The second chamber Q2 is located at the middle portion 102, and along the second direction Y, the second chamber Q2 is located below the first chamber Q1. The fourth chamber Q4 extends from the third chamber Q3 to the second chamber Q2. Since the second chamber Q2 participates in forming the ear-hook region, by arranging the second chamber Q2 and the third chamber Q3 separately and communicating through the fourth chamber Q4, it is conducive to reducing the internal space of the temple arm 10 occupied by the third chamber Q3 along the second direction Y, and thus conducive to increasing the space of the first chamber Q1 and further increasing the capacity of the electrode assembly.

In some embodiments, the housing 11 includes a body portion 111 and a cover portion 112. The cover portion 112 covers the body portion 111.

In some embodiments, the body portion 111 and the cover portion 112 together form the first chamber Q1 and the second chamber Q2.

In some embodiments, the body portion 111 and the cover portion 112 together form the first chamber Q1, the second chamber Q2, and the third chamber Q3.

In some embodiments, the body portion 111 and the cover portion 112 together form the first chamber Q1, the second chamber Q2, the third chamber Q3, and the fourth chamber Q4.

In some embodiments, referring to FIG. 4, the body portion 111 includes a first wall 1111, a second wall 1112, and a third wall 1113 which are sequentially connected, and the cover portion 112 includes a fourth wall 1121. Along the second direction Y, the first wall 1111 is opposite to the third wall 1113. Along the third direction Z, the second wall 1112 is opposite to the fourth wall 1121. The fourth wall 1121 covers the first wall 1111 and the third wall 1113 along the third direction Z.

In some embodiments, the first electrode assembly 12 abuts against the second wall 1112 and the fourth wall 1121, and the first electrode assembly 12 is a stacked electrode assembly. A stacking direction of the first electrode plate 122 and the second electrode plate 123 is parallel to the third direction Z. It is conducive to reducing the possibility of movement of the first electrode assembly 12 within the first chamber Q1 and improving the stability of the first electrode assembly 12.

In some embodiments, the body portion 111 includes a fifth wall 1114. Along the third direction Z, the fifth wall 1114 is connected to the second wall 1112 and the fourth wall 1121, and is located between the first wall 1111 and the third wall 1113 along the second direction Y.

In some embodiments, referring to FIG. 4, the first chamber Q1 includes the first wall 1111, a portion of the second wall 1112, the third wall 1113, and a portion of the fourth wall 1121. The fourth chamber Q4 includes the fifth wall 1114, a portion of the second wall 1112, the third wall 1113, and a portion of the fourth wall 1121. The first chamber Q1 and the fourth chamber Q4 are separated by the fifth wall 1114.

In some embodiments, a barrier layer (not shown) is provided on an inner wall of the first chamber Q1. In some embodiments, a barrier layer is provided on an inner wall of the fifth chamber Q5.

In some embodiments, the barrier layer includes at least one of aluminum oxide or silicon oxide. By providing the barrier layer on the inner wall of the chamber, it is conducive to improving the moisture barrier capability of the chamber and prolonging the service life of the electrode assembly.

In some embodiments, referring to FIG. 6, the body portion 111 includes sound holes 1115, and the sound holes 1115 penetrate through an inner wall and an outer wall of the second chamber Q2. The sound holes 1115 are conducive to transmitting the sound generated by the acoustic assembly 13, and improving the clarity of the sound heard by the wearer.

In some embodiments, the body portion 111 may not include the sound holes 1115, and the acoustic assembly 13 outputs audio through bone conduction.

In some embodiments, the housing 11 is made of a plastic material which is lighter than a metal material, which is conducive to reducing the weight of the temple arm 10. It is conducive to adopting injection molding to manufacture the housing 11 from the plastic material, and conducive to improving the convenience of manufacturing the housing 11. In some embodiments, the body portion 111 and the cover portion 112 are made of a plastic material.

In some embodiments, the plastic material is at least one of liquid crystal polymer or polychlorotrifluoroethylene. Liquid crystal polymer and polychlorotrifluoroethylene have excellent moisture barrier capability, which is conducive to prolonging the service life of the electrode assembly.

In some embodiments, the plastic material is at least one of polypropylene, polyethylene, or polyimide. When the housing 11 is made of at least one of polypropylene, polyethylene, or polyimide, a barrier layer is provided on the inner wall of the chamber provided with the electrode assembly.

In other embodiments, when the housing 11 is made of a metal material, a barrier layer may also be provided on the inner wall of the chamber provided with the electrode assembly. By providing the barrier layer, the insulation effect required for applying adhesives on the surfaces of the tabs can be replaced, which is conducive to reducing the possibility of short circuits caused when the positive tab and the negative tab make contact with the housing 11 at the same time.

In some embodiments, the plastic material has a water permeability of no greater than 0.01 g/m²/day.

In some embodiments, the body portion 111 and the cover portion 112 are manufactured from the plastic material using injection molding.

In some embodiments, the housing 11 is made of a metal material, which has excellent moisture barrier capability and is conducive to prolonging the service life of the electrode assembly. Moreover, the metal material has higher structural strength than the plastic material. Under the same structural strength requirements, using the metal material is conducive to making the housing 11 thinner and increasing the internal space of the housing 11, thereby further increasing the capacity of the electrode assembly. In some embodiments, the body portion 111 and the cover portion 112 are made of a metal material.

In some embodiments, the metal material is at least one of aluminum alloy, stainless steel, nickel, or magnesium alloy, which is conducive to improving the moisture barrier capability of the housing 11 and prolonging the service life of the electrode assembly.

In some embodiments, the metal material has a specific strength greater than 50,000 N·m/kg and a specific modulus greater than 24,000,000 N·m/kg.

In some embodiments, the body portion 111 and the cover portion 112 are manufactured from the metal material using stamping.

In some embodiments, referring to FIG. 1, the cover portion 112 includes a first cover body 112a, a second cover body 112b and a third cover body 112c. The first cover body 112a is integrally arranged with the body portion 111 and includes the first chamber Q1 and the fourth chamber Q4, the second cover body 112b is detachably assembled with the body portion 111 and includes the second chamber Q2, and the third cover body 112c is detachably assembled with the body portion 111 and includes the third chamber Q3.

The first cover body 112a being integrally arranged with the body portion 111 means that the first cover body 112a and the body portion 111 are complete as a whole and non-detachable. In some embodiments, after assembling the first electrode assembly 12 to the body portion 111 and filling with the electrolyte solution, the first cover body 112a then covers the body portion 111, making the first cover body 112a and the body portion 111 non-detachable by melting at the covering position.

In some embodiments, referring to FIG. 5, the cover portion 112 further includes a fourth cover body 112d. The fourth cover body 112d is integrally arranged with the body portion 111 and includes the fifth chamber Q5.

The fourth cover body 112d being integrally arranged with the body portion 111 means that the fourth cover body 112d and the body portion 111 are complete as a whole and non-detachable. In some embodiments, after assembling the second electrode assembly 15 to the body portion 111 and filling with the electrolyte solution, then covering the body portion 111 with the fourth cover body 112d, and making the fourth cover body 112d and the body portion 111 non-detachable by melting at the covering position.

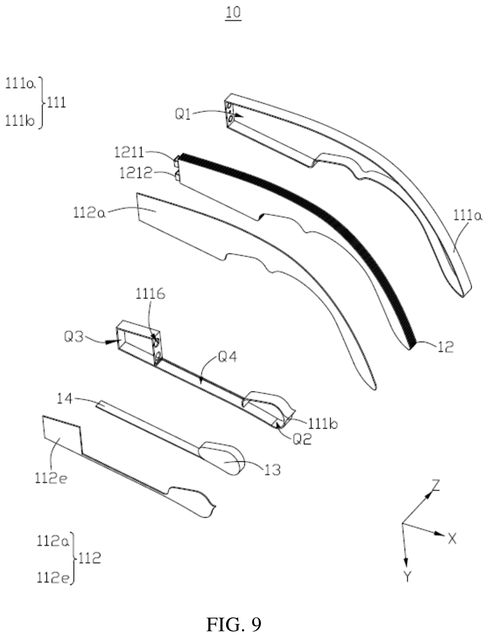

In some embodiments, referring to FIG. 6 and FIG. 9, the cover portion 112 includes a first cover body 112a and a fifth cover body 112e. The first cover body 112a is integrally arranged with the body portion 111 and includes the first chamber Q1. The fifth cover body 112e is detachably assembled with the body portion 111 and includes the second chamber Q2, the third chamber Q3, and the fourth chamber Q4.

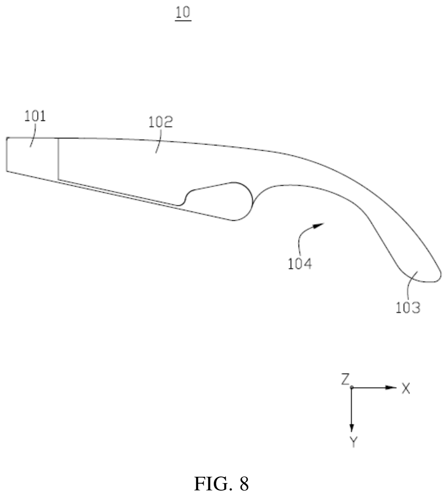

In some embodiments, referring to FIG. 8 and FIG. 9 in combination, the body portion 111 includes a first main body 111a and a second main body 111b. The first main body 111a and the second main body 111b are detachably connected to each other. It is conducive to adopting different manufacturing processes to manufacture the first main body 111a and the second main body 111b separately, and improving the flexibility of manufacturing the body portion 111.

In some embodiments, referring to FIG. 9, the second main body 111b is provided with connecting holes 1116, and the connecting holes 1116 are in communication with the third chamber Q3. The first electrode terminal 121 extends into the connecting hole 1116. It is conducive to improving the convenience of electrical connection between the first electrode assembly 12 and the control assembly. In some embodiments, the first tab 1211 and the second tab 1212 are located within the first main body 111a, the electrode posts are electrically connected to the first tab 1211 and the second tab 1212, and the electrode posts extend out of the first main body 111a and extend into the connecting holes 1116.

In some embodiments, the first main body 111a includes an ear-hook portion 104, and the ear-hook portion 104 and the second main body 111b together form an ear-hook portion. It is conducive to enabling the acoustic assembly 13 in the second chamber Q2 to be closer to the ear during wearing, thereby improving the auditory experience of the wearer.

In some embodiments, the first main body 111a and the second main body 111b are connected by bonding. It is conducive to improving the convenience of disassembling the first main body 111a and the second main body 111b. In some embodiments, an adhesive is applied on the surface where the first main body 111a is connected to the second main body 111b, so that the first main body 111a and the second main body 111b are bonded through the adhesive.

In some embodiments, the first main body 111a and the second main body 111b are snap-fitted. It is conducive to improving the stability of the connection between the first main body 111a and the second main body 111b. In some embodiments, a recessed structure is provided on one of the first main body 111a and the second main body 111b, and a raised structure matching the recessed structure is provided on the other of the first main body 111a and the second main body 111b, so that the first main body 111a and the second main body 111b are snap-fitted through the recessed structure and the raised structure.

In some embodiments, the first main body 111a and the second main body 111b are connected by screwing. It is conducive to improving the connection strength between the first main body 111a and the second main body 111b. In some embodiments, a screw hole is provided in one of the first main body 111a and the second main body 111b, and a threaded structure matching the screw hole is provided in the other of the first main body 111a and the second main body 111b, so that the first main body 111a and the second main body 111b are screwed by screwing the threaded structure into the screw hole.

In some embodiments, the first main body 111a and the second main body 111b are connected by riveting. It is conducive to improving the reliability of the connection between the first main body 111a and the second main body 111b. In some embodiments, a rivet hole is provided in one of the first main body 111a and the second main body 111b, and a rivet matching the rivet hole is provided in the other of the first main body 111a and the second main body 111b, so that the first main body 111a and the second main body 111b are riveted by placing the rivet into the rivet hole.

In some embodiments, the first main body 111 a and the first cover body 112 a are made of a plastic material, and the water permeability of the plastic material is no greater than 0.01 g/m²/day. It is conducive to adopting injection molding to manufacture the first main body 111a and first cover body 112a from the plastic material, and conducive to improving the convenience of the manufacturing process.

In some embodiments, the first main body 111a and first cover body 112a are made of a metal material, and the metal material has a specific strength greater than 50,000 N·m/kg and a specific modulus greater than 24,000,000 N·m/kg. It is conducive to adopting stamping to manufacture the first main body 111a and first cover body 112a, which is conducive to improving the moisture barrier capability of the first chamber Q1 and enabling the first main body 111a and first cover body 112a to be made thinner.

In some embodiments, the second main body 111b and the fifth cover body 112e are made of conventional temple arm materials such as plastic titanium, tungsten titanium, and nylon. Using the conventional temple arm materials to manufacture the second main body 111b and the fifth cover body 112e is conducive to improving the convenience of manufacturing the temple arm 10.

In other embodiments, the second main body 111b and the fifth cover body 112e are made of a metal material or other plastic materials, which is not limited in this application.

In some embodiments, the housing 11 includes a first housing and a second housing. The first housing is detachably connected to the second housing. The first housing includes the first chamber Q1, and the second housing includes the second chamber Q2, the third chamber Q3, and the fourth chamber Q4. It is conducive to adopting different manufacturing processes to manufacture the first housing and the second housing separately, and improving the flexibility of manufacturing the housing 11.

In some embodiments, referring to FIG. 9, the first housing includes the first main body 111a and the first cover body 112a, and the second housing includes the second main body 111b and the fifth cover body 112e.

In some embodiments, the housing 11 further includes a third housing, and the first housing is detachably connected to the third housing. The first housing includes the first chamber Q1, the second housing includes the second chamber Q2, the third chamber Q3, and the fourth chamber Q4, and the third housing includes the fifth chamber Q5. It is conducive to adopting different manufacturing processes to manufacture the first housing, the second housing, and the third housing separately, and improving the flexibility of manufacturing the housing 11.

In some embodiments, the first housing is made of at least one of aluminum alloy, stainless steel, nickel, or magnesium alloy. In some embodiments, the first housing is made of at least one of liquid crystal polymer or polychlorotrifluoroethylene. It is conducive to improving the moisture barrier capability of the first housing and prolonging the service life of the first electrode assembly 12.

In some embodiments, the first housing is made of at least one of polypropylene, polyethylene, or polyimide. The barrier layer is provided on the inner wall of the first chamber Q1 and includes at least one of aluminum oxide or silicon oxide. By providing the barrier layer on the inner wall of the first chamber Q1, it is conducive to improving the moisture barrier capability of the first chamber Q1 and prolonging the service life of the first electrode assembly 12.

In some embodiments, the second housing is made of conventional temple arm materials such as plastic titanium, tungsten titanium and nylon. Using the conventional temple arm materials to manufacture the second housing is conducive to improving the convenience of manufacturing the temple arm 10.

In some embodiments, the third housing is made of at least one of aluminum alloy, stainless steel, nickel, or magnesium alloy. In some embodiments, the third housing is made of at least one of liquid crystal polymer or polychlorotrifluoroethylene. It is conducive to improving the moisture barrier capability of the third housing and prolonging the service life of the second electrode assembly 15.

In some embodiments, the third housing is made of at least one of polypropylene, polyethylene, or polyimide. The barrier layer is provided on the inner wall of the fifth chamber Q5 and includes at least one of aluminum oxide or silicon oxide. By providing the barrier layer on the inner wall of the fifth chamber Q5, it is conducive to improving the moisture barrier capability of the fifth chamber Q5 and prolonging the service life of the second electrode assembly 15.

The following illustrates the condition of the capacity increase of the electrode assembly achieved by the temple arm 10 of this application with Table 1.

**Table 1: Condition of Capacity Increase of Electrode Assembly Achieved by Temple Arm 10 of This Application**

| Shell wall thickness D2/mm of electrode assembly | Assembly gap D3/mm | Thickness D4/mm of electrode assembly | Area S/mm² of electrode plate | Volume V/mm³ of electrode assembly | Capacity /mAh | Capacity increase | Manufacturability |
|---|---|---|---|---|---|---|---|
| 0.15 | 0.2 | 2.68 | 332 | 890 | 200 | / | Easy |
| 0 | 0 | 3.38 | 332 | 1122 | 252 | 26% | Easy |
| 0 | 0 | 4.38 | 332 | 1454 | 327 | 63% | Difficult |
| 0 | 0 | 3.38 | 434 | 1467 | 330 | 65% | Easy |
| 0 | 0 | 3.38 | 920 | 3110 | 699 | 249% | Easy |
| 0 | 0 | 4.38 | 921 | 4034 | 907 | 353% | Easy |

In Table 1, in Comparative embodiment, and Embodiment 1 to Embodiment 3, the acoustic assembly 13 is disposed along the first direction X on the side that is of the first electrode assembly 12 and that is close to the leg portion 103. In Comparative embodiment, and Embodiment 1 to Embodiment 3, the body portion 111 is integrally formed. The housing 11 of Comparative embodiment, and Embodiment 1, and Embodiment 3 is made of the plastic material, while the housing 11 of Embodiment 2 is made of the metal material. The second electrode assembly 15 is provided in Embodiment 3 compared with Embodiment 1 and Embodiment 2. In Embodiment 4 and Embodiment 5, the acoustic assembly 13 is disposed along the second direction Y on the side that is of the first electrode assembly 12 close to an ear-hook portion 104. The housing 11 of Embodiment 4 and Embodiment 5 includes the first housing and the second housing. Both the first housing and the second housing of Embodiment 4 are made of the plastic material. The first housing of Embodiment 5 is made of the metal material, while the second housing of Embodiment 5 is made of the plastic material.

In Table 1, thickness D0 of temple arm 10 = wall thickness D1 of housing 11 multiplied by 2 + shell thickness D2 of electrode assembly multiplied by 2 + assembly gap D3 multiplied by 2 + thickness D4 of electrode assembly. The values of the wall thickness D1 of the housing 11, the shell thickness D2 of the electrode assembly, and the assembly gap D3 are all single-side values. The assembly gap D3 is the assembly gap between the housing 11 and the shell of the electrode assembly.

In Comparative embodiment of Table 1, the shell of the electrode assembly is included between the electrode assembly and the housing 11. In Embodiment 1 to Embodiment 5 of Table 1, the shell of the electrode assembly is not included between the electrode assembly and the housing 11. That is, the housing 11 serves as the shell of the electrode assembly, which is conducive to increasing the volume available for arranging the electrode assembly within the housing 11, thereby increasing the capacity of the electrode assembly. In this case, the assembly gap between the shell of the electrode assembly and the housing **11** is 0.

In Table 1, an area S of an electrode plate is an area of the positive electrode plate. In some embodiments, the area of the positive electrode plate is smaller than that of the negative electrode plate.

In Table 1, volume V of electrode assembly = thickness D4 of electrode assembly * area S of electrode plate.

In Table 1, capacity increase = (capacity of embodiment - capacity of comparative embodiment) / capacity of comparative embodiment.

In Table 1, Comparative embodiment, Embodiment 1, Embodiment 3, and Embodiment 4 all adopt injection molding to manufacture the housing 11 from the plastic material, so the manufacturability of Comparative embodiment, Embodiment 1, Embodiment 3 and Embodiment 4 is easy. Embodiment 2 adopts stamping to manufacture the housing 11 from the metal material, and the overall structure of the housing 11 is relatively complex, so the manufacturability of Embodiment 2 is difficult. Embodiment 5 adopts stamping to manufacture the first housing from the metal material and adopts injection molding to manufacture the second housing from the plastic material, splitting the relatively complex overall structure of the housing 11 into two simpler structures manufactured through different processes, so the manufacturability of Embodiment 5 is easy.

In a second aspect of embodiments of this application, smart glasses are provided and include a frame, lenses and temple arms 10 , wherein at least one of the temple arms 10 is the temple arm 10 provided in the first aspect, the lenses are disposed on the frame, and the temple arms 10 are connected to the frame. The temple arm 10 is conducive to increasing the capacity of the electrode assembly, thereby conducive to improving the battery life of the smart glasses.

In addition, a person of ordinary skill in the art understands that the above embodiments are merely intended to illustrate this application, but not intended to limit this application. Any and all appropriate modifications and changes made to the embodiments without departing from the substantial scope of this application still fall within the protection scope of this application.

## Claims

1. A temple arm (10), **characterized in that** the temple arm (10) comprises:
a housing (11), the housing (11) comprising a first chamber (Q1) and a second chamber (Q2);
a first electrode assembly (12), the first electrode assembly (12) comprising a first electrode terminal (121), the first electrode assembly (12) being disposed in the first chamber (Q1), and the first electrode terminal (121) extending out of the first chamber (Q1) and being located within the housing (11);
an electrolyte solution, the electrolyte solution being directly accommodated in the first chamber (Q1); and
an acoustic assembly (13), disposed in the second chamber (Q2), the acoustic assembly (13) being electrically connected to the first electrode terminal (121).

2. The temple arm (10) according to claim 1, **characterized in that** the housing (11) comprises a third chamber (Q3) and a fourth chamber (Q4), the third chamber (Q3) is provided with a control assembly, and the fourth chamber (Q4) is provided with wiring (14); and the first electrode terminal (121) and the acoustic assembly (13) are electrically connected to the control assembly, and the fourth chamber (Q4) is in communication with the second chamber (Q2) and the third chamber (Q3).

3. The temple arm (10) according to claim 2, **characterized in that** along a first direction (X), the third chamber (Q3), the first chamber (Q1), and the second chamber (Q2) are sequentially connected.

4. The temple arm (10) according to any one of claims 1-3, **characterized in that** the temple arm (10) comprises a second electrode assembly (15), and the second electrode assembly (15) comprises a second electrode terminal (151); the housing (11) comprises a fifth chamber (Q5); and along the first direction (X), the third chamber (Q3), the first chamber (Q1), the second chamber (Q2), and the fifth chamber (Q5) are sequentially connected; the second electrode assembly (15) is disposed in the fifth chamber (Q5), and the second electrode terminal (151) extends out of the fifth chamber (Q5) and is located within the housing (11); and an other electrolyte solution is directly accommodated in the fifth chamber (Q5).

5. The temple arm (10) according to claim 4, **characterized in that** the first electrode terminal (121) and the second electrode terminal (151) extend toward the third chamber (Q3).

6. The temple arm (10) according to claim 2, **characterized in that** the first chamber (Q1) is connected to the third chamber (Q3) along a first direction (X); along a second direction (Y), a projection of the first chamber (Q1) covers a projection of the second chamber (Q2); the housing (11) comprises an ear-hook portion (104), and the ear-hook portion (104) is connected to the second chamber (Q2) along the first direction (X); and the first direction (X) is perpendicular to the second direction (Y).

7. The temple arm (10) according to claim 6, **characterized in that** the housing (11) comprises a first housing (111) and a second housing (112), and the first housing (111) and the second housing (112) are detachably connected to each other; the first housing (111) comprises the first chamber (Q1); and the second housing (112) comprises the second chamber (Q2), the third chamber (Q3), and the fourth chamber (Q4).

8. The temple arm (10) according to claim 4, **characterized in that** the housing (11) comprises a first housing (111), a second housing (112), and a third housing (113); the first housing (111) and the second housing (112) are detachably connected to each other; the first housing (111) and the third housing (113) are detachably connected to each other; the first housing (111) comprises the first chamber (Q1); the second housing (112) comprises the second chamber (Q2), the third chamber (Q3), and the fourth chamber (Q4); and the third housing (113) comprises the fifth chamber (Q5).

9. The temple arm (10) according to any one of claims 1 to 6, **characterized in that** the housing (11) is made of at least one of aluminum alloy, stainless steel, nickel, or magnesium alloy; or the housing (11) is made of at least one of liquid crystal polymer or polychlorotrifluoroethylene.

10. The temple arm (10) according to any one of claims 1 to 6, **characterized in that** the housing (11) is made of at least one of polypropylene, polyethylene, or polyimide; a barrier layer is provided on an inner wall of the first chamber (Q1), and the barrier layer comprises at least one of aluminum oxide or silicon oxide.

11. The temple arm (10) according to claim 7, **characterized in that** the first housing (111) is made of at least one of aluminum alloy, stainless steel, nickel, or magnesium alloy; or the first housing (111) is made of at least one of liquid crystal polymer or polychlorotrifluoroethylene.

12. The temple arm (10) according to claim 7, **characterized in that** the first housing (111) is made of at least one of polypropylene, polyethylene or polyimide; a barrier layer is provided on the inner wall of the first chamber (Q1), and the barrier layer comprises at least one of aluminum oxide or silicon oxide.

13. The temple arm (10) according to claim 8, **characterized in that** the first housing (111) and the third housing (113) are made of at least one of aluminum alloy, stainless steel, nickel, or magnesium alloy; or the first housing (111) and the third housing (113) are made of at least one of liquid crystal polymer or polychlorotrifluoroethylene.

14. The temple arm (10) according to claim 8, **characterized in that** the first housing (111) and the third housing (113) are made of at least one of polypropylene, polyethylene or polyimide; barrier layers are provided on inner walls of the first chamber (Q1) and the fifth chamber (Q5), and the barrier layers comprise at least one of aluminum oxide or silicon oxide.

15. Smart glasses, **characterized in that** the smart glasses comprise a frame, lenses and temple arms (10); wherein at least one of the temple arms (10) is the temple arm (10) according to any one of claims 1 to 14; the lenses are disposed on the frame, and the temple arms (10) are connected to the frame.
